# DEMANDE DE BREVET EUROPEEN

(11) **EP 0 768 469 A1**
(43) Date de publication de la demande: **16.04.1997**
(21) Numéro de dépôt: 96402115.8
(22) Date de dépôt: 04.10.1996
(51) Int. Cl.: F16B 37/08, G01M 1/04

(54) **Dispositif de fixation rapide sur un arbre fileté d'entraînement en rotation**

(30) Priorité: 12.10.1995 FR 9511968
(71) Demandeur: MULLER BEM, F-28000 Chartres (FR)
(72) Inventeur: Muller, Patrice, 28000 Chartres (FR); Sauzay, Olivier, 28630 Coudray (FR)
(74) Mandataire: Boutin, Antoine

(57) **Abrégé**

Un dispositif de fixation rapide comporte un corps 1 avec au moins une poignée 2 de serrage. Le corps 1 est obturé par un couvercle 3 et contient un moyen 7 de rappel élastique d'un organe 8 rotatif d'actionnement apte à déplacer radialement deux blocs 13 formant peignes filetés. L'organe d'actionnement et les deux blocs sont solidarisés entre-eux par un montage à l'aide d'une rainure 14 et d'une goupille 15.

Application à la fixation rapide de corps à équilibrer sur une équilibreuse.

## Description

L'invention est relative à un dispositif de fixation rapide sur un arbre fileté d'entraînement en rotation, notamment pour équilibreuse.

Dans cette application, on utilise de tels dispositifs de fixation rapide pour fixer des roues de véhicules à équilibrer, en poussant tout d'abord le long de l'arbre fileté d'entraînement en rotation la jante de la roue de véhicule à équilibrer, puis on engage le dispositif de fixation rapide en position d'ouverture jusqu'à proximité de la jante ; on relâche ensuite un moyen de rappel élastique de deux peignes filetés au contact de l'arbre fileté d'entraînement en rotation et on serre le dispositif de fixation rapide au moyen de deux poignées de serrage extérieures.

Pour libérer rapidement la roue de véhicule après équilibrage, on procède en sens inverse en desserrant le dispositif de fixation au moyen des poignées de serrage, puis on actionne un organe rotatif agissant à l'encontre du moyen de rappel élastique pour déplacer radialement les peignes filetés en position d'ouverture et on dégage le dispositif de fixation rapide en le tirant le long de l'arbre fileté jusqu'à extraction totale.

De tels dispositifs de fixation rapide sont connus dans cette application et sont par exemple du type décrit dans le document US 4 768 909. Ces dispositifs connus présentent cependant l'inconvénient de ne pas être facilement déverrouillables en position serrée et de présenter un mouvement des peignes filetés non équilibré ou s'effectuant selon une trajectoire formant un angle avec le cylindre circonscrit à l'arbre fileté d'entraînement en rotation : l'approche au contact jusqu'à mise en prise des peignes filetés avec l'arbre d'entraînement en rotation s'effectue ainsi, soit avec des efforts de déviation, soit selon une trajectoire oblique, susceptible d'endommager le filetage de l'arbre après répétition de nombreux cycles de serrage et de desserrage.

L'invention a pour but de remédier aux inconvénients précités en créant un nouveau dispositif de fixation rapide dans lequel le mouvement des peignes filetés s'effectue selon un mouvement de translation radiale sans aucun effort notable de déviation lors de l'actionnement de l'organe rotatif d'actionnement agissant à l'encontre du moyen de rappel élastique.

L'invention a pour objet un dispositif de fixation rapide sur un arbre fileté d'entraînement en rotation, notamment pour équilibreuse, comportant : un corps à au moins une poignée de serrage, obturé par un couvercle, et contenant un moyen de rappel élastique d'un organe rotatif d'actionnement apte à déplacer radialement deux blocs formant peignes filetés, caractérisé en ce que l'organe d'actionnement et les deux blocs formant peignes filetés sont solidarisés entre eux par un montage équilibré et sensiblement symétrique, de manière à déplacer les blocs selon un mouvement de translation radial sans aucun effort notable de déviation lors de l'actionnement dudit organe.

Selon d'autres caractéristiques de l'invention :
- l'organe d'actionnement présente deux bandes de guidage insérées chacune dans une rainure d'un bloc formant peigne fileté et prises chacune entre le fond de la rainure correspondante et une tige solidaire du bloc, de manière à repousser la tige radialement extérieurement lors de l'actionnement de l'organe afin de provoquer l'écartement radial des deux blocs ;
- les bandes de guidage sont conformées pour définir une trajectoire en spirale ;
- les bandes de guidage sont sensiblement rectilignes ;
- les bandes de guidage sont inclinées par rapport aux cercles ayant pour centre le centre de rotation de l'organe d'actionnement selon un angle compris entre 15 et 40 degrés d'angle ;
- au moins une poignée de serrage présente un contour à l'intérieur duquel une gâchette de l'organe d'actionnement s'efface au moins partiellement lors de la rotation de l'organe d'actionnement dans la position correspondant à l'écartement des blocs formant peignes filetés ;
- l'organe d'actionnement présente une conformation sensiblement radiale venant buter contre un organe solidaire d'un bloc fileté en position de prise avec l'arbre fileté ;
- le couvercle comporte deux parties en relief complémentaires des blocs formant peignes filetés déplaçables radialement pour définir une surface sensiblement plane de maintien de l'organe d'actionnement lors de la rotation de celui-ci ;
- le corps comporte une surface d'appui soutenant l'organe d'actionnement dans une position située sensiblement à mi-hauteur du corps.

L'invention sera mieux comprise grâce à la description qui va suivre donnée à titre d'exemple non limitatif en référence aux dessins annexés dans lesquels :

La figure 1 représente schématiquement une vue éclatée d'un dispositif selon l'invention en perspective et en coupes transversales.

La figure 2 représente schématiquement une vue avec coupe partielle selon la ligne II-II de la figure 3 d'un dispositif selon l'invention en position de repos et de fermeture.

La figure 3 représente schématiquement une vue en coupe partielle selon la ligne III-III de la figure 2 d'un dispositif selon l'invention en position de repos et en position de fermeture.

La figure 4 représente schématiquement une vue en coupe partielle selon la ligne IV-IV de la figure 5 d'un dispositif selon l'invention en position de déclenchement et d'ouverture.

La figure 5 représente schématiquement une vue en coupe selon la ligne V-V de la figure 4 d'un dispositif selon l'invention en position de déclenchement et d'ouverture.

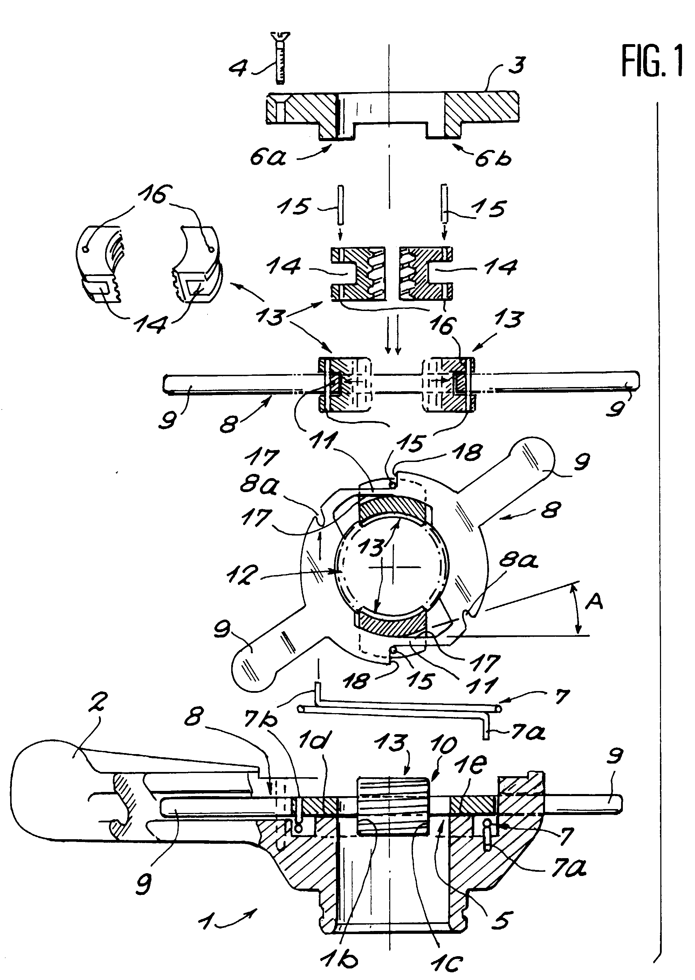

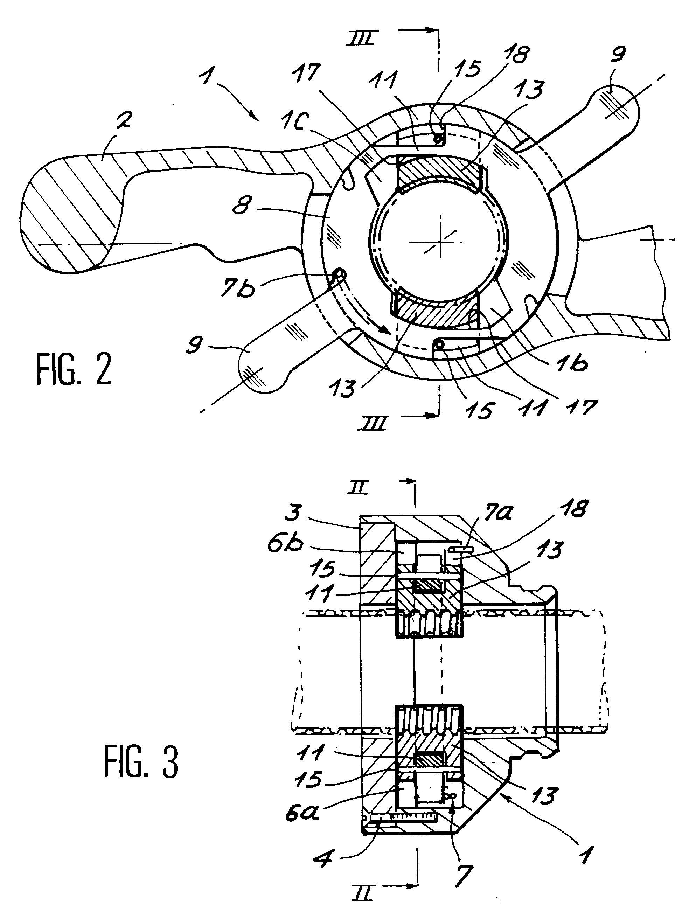

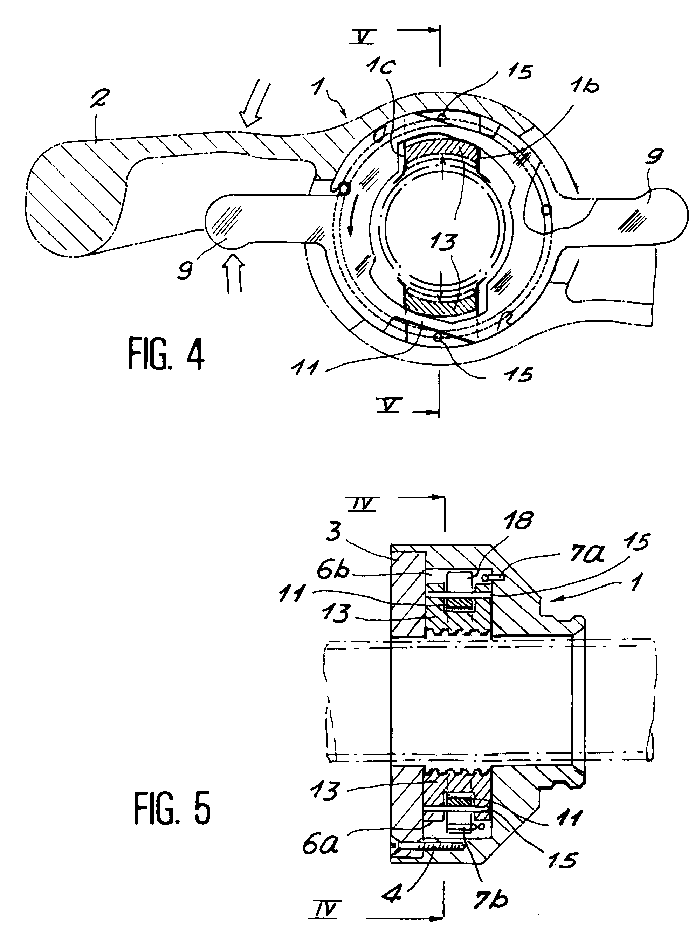

En référence aux figures 1 à 5, les éléments de repères identiques désignent des éléments identiques ou fonctionnellement équivalents entre eux.

Le dispositif de fixation rapide comporte un corps 1 avec deux poignées de serrage 2 et un couvercle 3 d'obturation du corps fixé à l'aide de vis 4 ou d'organes équivalents. Le corps 1 comporte une surface d'appui annulaire 5 située sensiblement à mi-hauteur du corps 1, tandis que le couvercle 3 présente des parties en relief 6a et 6b s'engageant à l'intérieur du corps 1.

Un moyen de rappel élastique, par exemple du genre ressort spiral 7, est prévu pour rappeler l'organe d'actionnement 8 en position déterminée par rapport au corps 1. L'organe de rappel 7 est engagé par son extrémité recourbée 7a dans un orifice la du corps et par une autre extrémité recourbée 7b dans un orifice 8a de l'organe d'actionnement 8.

L'organe d'actionnement 8 comporte deux gâchettes 9 diamétralement opposées qui dépassent après montage des ouvertures 10 pratiquées dans le corps 1, deux bandes de guidage 11, une ouverture centrale 12 dont le contour correspond à une liberté de passage sur l'arbre fileté d'entraînement en rotation de l'équilibreuse et au déplacement des segments filetés destinés à coopérer avec cet arbre d'entraînement en rotation. L'organe d'actionnement 8 est usiné de préférence dans une tôle d'épaisseur réduite, de manière à être sensiblement symétrique par rapport à son axe de rotation lors de l'actionnement.

Deux blocs 13 sont usinés pour former des peignes filetés sur la face radialement intérieure et portent chacun une rainure 14 sensiblement à mi-hauteur de chaque bloc 13, tandis que des goupilles 15 sont prévues pour s'engager dans des orifices 16 traversant les parties radialement extérieures des blocs 13 après assemblage.

Selon l'invention, l'organe d'actionnement 8 et les deux blocs 13 formant peignes filetés sont solidarisés entre eux par un montage équilibré et sensiblement symétrique par rapport à l'axe de rotation de l'organe d'actionnement après assemblage : à cet effet, on engage les bandes de guidage 11 dans les rainures 14 des blocs 13 et on verrouille chaque bande de guidage 11 au fond de chaque rainure 14 grâce à l'engagement d'une goupille 15 dans un orifice 16.

Dans le mouvement d'ouverture par actionnement des gâchettes 9 à l'encontre du ressort de rappel 7, les bandes de guidage 11 repoussent les tiges 15 radialement extérieurement et provoquent l'écartement radial des deux blocs 13, qui se déplacent selon un mouvement pur de translation radiale limité latéralement par deux parois 1b et 1c du corps 1. L'organe d'actionnement 8 ne produit aucun effort notable de déviation du mouvement des blocs 13, du fait que chaque surface intérieure 17 limitant la bande de guidage 11 est conformée pour définir une trajectoire régulière et continue. Avantageusement, le contour de la surface de glissement 17 définit une trajectoire en spirale ou alternativement comporte une bande de guidage sensiblement rectiligne. Dans ce cas, les bandes de guidage 11 sont inclinées par rapport aux cercles ayant pour centre le centre de rotation de l'organe 8 d'actionnement selon un angle A compris entre 15 et 40° d'angle, de préférence compris entre 23 et 30° d'angle.

Selon une variante avantageuse, chaque gâchette 9 de l'organe d'actionnement 8 s'efface au moins partiellement dans le contour de chaque poignée 2 de serrage adjacente. Ceci permet de rapprocher les gâchettes et de tenir simultanément les gâchettes 9 et les poignées 2 à pleine main lors de la mise en place et du retrait du dispositif d'actionnement ; lors du serrage ou du desserrage, il convient tout d'abord d'exercer l'effort sur l'extrémité des poignées 2 en n'appuyant pas sur les gâchettes 9, puis, après serrage ou desserrage, il suffit simplement sans changer la position des mains, d'appuyer sur les gâchettes 9 pour extraire ou engager rapidement le dispositif de fixation selon l'invention. Le mouvement naturel de préhension et d'application des efforts se fait ainsi de manière continue sans aucune fatigue, contrairement à la mise en oeuvre du dispositif de l'art antérieur, qui nécessitait une action séparée du pouce s'avérant pénible après de nombreux cycles de serrage et desserrage dans la même journée de travail.

L'organe d'actionnement 8 présente à l'extrémité correspondant à la fermeture du dispositif et à l'engagement sur l'arbre fileté une conformation 18 sensiblement radiale venant buter contre une goupille 15 d'un bloc fileté 13 lorsque les peignes 13 sont en prise avec l'arbre fileté d'entraînement en rotation. Cette disposition fournit un arrêt reproductible de l'organe d'actionnement 8 contre les peignes 13.

En outre, l'absence d'effort sur l'organe d'actionnement 8 en raison de la disposition équilibrée et symétrique des pièces mobiles permet de réduire l'épaisseur de l'organe 8, étant donné que cet organe est maintenu sensiblement à mi-hauteur du corps 1 par des surfaces d'appui sensiblement planes. Une première surface d'appui est fournie par les parties en relief 1d et le complémentaires du corps 1, tandis qu'une deuxième surface d'appui et de soutien de l'organe d'actionnement 8 est fournie par les surfaces limitant les parties en relief 6a et 6b du couvercle 3. Ainsi, l'organe d'appui 8 est soutenu sensiblement à mi-hauteur du corps de part et d'autre par des appuis plans qui évitent tout gauchissement de l'organe d'actionnement 8 lors de sa mise en rotation à l'aide des gâchettes 9.

A l'exception des peignes mobiles réalisés obligatoirement en métal, et du ressort spiral 7 en acier à ressort, il est possible de fabriquer les autres pièces tels que le corps 1, le couvercle 3 et éventuellement l'organe d'actionnement 8 en des matières plastiques, du genre polyamide ou équivalent, ce qui permet d'alléger considérablement le dispositif de fixation selon l'invention.

L'invention décrite en référence à un mode de réalisation particulier n'y est nullement limitée mais couvre au contraire toute modification de forme et toute variante de réalisation dans le cadre et l'esprit de l'invention.

## Revendications

1. Dispositif de fixation rapide sur un arbre fileté d'entraînement en rotation, notamment pour équilibreuse, comportant : un corps (1) à au moins une poignée de serrage (2), obturé par un couvercle (3), et contenant un moyen de rappel (7) élastique d'un organe rotatif (8) d'actionnement apte à déplacer radialement deux blocs (13) formant peignes filetés, caractérisé en ce que l'organe (8) d'actionnement et les deux blocs (13) formant peignes filetés sont solidarisés entre eux par un montage équilibré et sensiblement symétrique, de manière à déplacer les blocs selon un mouvement de translation radial sans aucun effort de déviation lors de l'actionnement dudit organe.

2. Dispositif selon la revendication 1, caractérisé en ce que l'organe d'actionnement (8) présente deux bandes (11) de guidage insérées chacune dans une rainure (14) d'un bloc (13) formant peigne fileté et prises chacune entre le fond de la rainure (14) correspondante et une tige (15) solidaire du bloc, de manière à repousser la tige (15) radialement extérieurement lors de l'actionnement de l'organe (8) afin de provoquer l'écartement radial des deux blocs (13).

3. Dispositif selon la revendication 2, caractérisé en ce que les bandes de guidage (11) sont conformées pour définir une trajectoire en spirale.

4. Dispositif selon la revendication 2, caractérisé en ce que les bandes de guidage (11) sont sensiblement rectilignes.

5. Dispositif selon la revendication 4, caractérisé en ce que les bandes de guidage (11) sont inclinées par rapport aux cercles ayant pour centre le centre de rotation de l'organe d'actionnement selon un angle (A) compris entre 15 et 40 degrés d'angle.

6. Dispositif selon la revendication 5, caractérisé en ce qu'au moins une poignée de serrage (2) présente un contour à l'intérieur duquel une gâchette (9) de l'organe d'actionnement (8) s'efface au moins partiellement lors de la rotation de l'organe d'actionnement (8) dans la position correspondant à l'écartement des blocs (13) formant peignes filetés.

7. Dispositif selon l'une des revendications précédentes, caractérisé en ce que l'organe (8) d'actionnement présente une conformation sensiblement radiale (18) venant buter contre un organe (15) solidaire d'un bloc (13) fileté en position de prise avec l'arbre fileté.

8. Dispositif selon l'une des revendications précédentes, caractérisé en ce que le couvercle (3) comporte deux parties (6a,6b) en relief complémentaires des blocs (13) formant peignes filetés déplaçables radialement pour définir une surface sensiblement plane de maintien de l'organe d'actionnement (8) lors de la rotation de celui-ci.

9. Dispositif selon l'une des revendications précédentes, caractérisé en ce que le corps (1) comporte une surface d'appui (5) soutenant l'organe d'actionnement (8) dans une position située sensiblement à mi-hauteur du corps.
